# EUROPÄISCHE PATENTSCHRIFT

(11) **EP 1 982 089 B1**
(45) Veröffentlichungstag und Bekanntmachung des Hinweises auf die Patenterteilung: **26.09.2012**
(21) Anmeldenummer: 07703014.6
(22) Anmeldetag: 25.01.2007
(51) Int. Cl.: F16D 65/18, F16D 65/38

(54) **SCHEIBENBREMSE IN SELBSTVERSTÄRKENDER BAUART**
SELF-ENERGIZING DISK BRAKE
FREIN À DISQUE DU TYPE À AUTO-AMPLIFICATION

(30) Priorität: 26.01.2006 DE 102006003749
(43) Veröffentlichungstag der Anmeldung: 22.10.2008
(73) Patentinhaber: KNORR-BREMSE Systeme für Nutzfahrzeuge GmbH, 80809 München (DE)
(72) Erfinder: BAUMGARTNER, Johann, 85368 Moosburg (DE); GEISSLER, Steffen, 85399 Hallbergmoos (DE); TRIMPE, Robert, 82234 Wessling (DE)
(74) Vertreter: Mattusch, Gundula
(86) Internationale Anmeldenummer: PCT/EP2007/000617
(87) Internationale Veröffentlichungsnummer: WO 2007/085440

(56) Entgegenhaltungen:
- WO-A-2005/064195
- DE-A1- 10 157 324
- DE-A1- 10 201 221
- DE-A1- 10 324 424

## Beschreibung

Die Erfindung betrifft eine Scheibenbremse in selbstverstärkender Bauart nach dem Oberbegriff des Anspruchs 1.

Eine selbstverstärkende Scheibenbremse für PKW zeigt die DE 101 643 17 oder die nachveröffentlichte WO 2006/042621 A1.

Selbstverstärkende Bremsen sind in verschiedensten Ausgestaltungen bekannt. So stellen eine klassische Bauart selbstverstärkender Bremsen die Trommelbremsen dar, wo mindestens eine Bremsbacke auflaufend angeordnet ist, so dass die Reibungskräfte zwischen Bremsbelag und Trommel die Spannkraft unterstützen.

Sollen auch bei schwereren Nutzfahrzeugen Scheibenbremsen mit elektromotorisch betriebenen Betätigungseinrichtungen eingesetzt werden, wird die selbstverstärkende Scheibenbremse zur Option, da sie die Möglichkeit dazu eröffnet, den Elektromotor aufgrund der Selbstverstärkung der Bremse kleiner zu dimensionieren, als dies bei einer nicht selbstverstärkenden Schiebenbremse möglich wäre.

Die Mehrzahl der bekannten Lösungen betreffen Wirkprinzipien, welche zwar eine Selbstverstärkung ermöglichen, die aber i.allg. aufgrund mangelnder Praxistauglichkeit sowie aufgrund eines umständlichen konstruktiven Aufbaus nicht zur Realisierung einer serienreifen, wirtschaftlich herstellbaren Scheibenbremse für schwere Nutzfahrzeuge geeignet sind und daher oftmals das Stadium theoretischer Überlegungen nicht überschritten haben.

Vor diesem Hintergrund ist es die Aufgabe der Erfindung, eine elektromechanisch betriebene, selbstverstärkende Scheibenbremse zu schaffen, die einen einfachen konstruktiven Aufbau aufweist und ein weitgehend gleichmäßiges Verschleißverhalten der Bremsscheibe bzw. des Bremsscheibenringes realisiert.

Die Erfindung löst diese Aufgabe durch den Gegenstand des Anspruchs 1.

Vorteilhafte Ausgestaltungen sind den Unteransprüchen zu entnehmen.

Dabei ist die Zuspanneinheit dazu ausgelegt, den Bremsbelag oder die Bremsbelageinheit auf einer nicht geraden Bahn, insbesondere einer gekrümmten Kurvenbahn, parallel zur Bremsscheibenreibfläche zu bewegen, wobei die Zuspanneinheit eine Kurbel aufweist, die einen Kurbelzapfen hat, der sich parallel zur Bremsscheibenachse erstreckt und der zur Bewegung der Bremsbelageinheit tangential zur Bremsscheibe, d.h. parallel zur Bremsscheibenreibfläche, dient und formschlüssig in eine korrespondierende Öffnung in der Druckplatte eingreift, so dass die Bremsbelageinheit direkt und unmittelbar der Bewegung der Kurbel folgt.

Diese Maßnahmen führen zu einer besonders gleichmäßigen Zugspannung und zu einem gleichmäßigeren Verschleißverhalten der Bremsscheibe bzw. des Bremsscheibenringes, da verhindert wird, dass sich die Beläge der Teilbelagscheibenbremse in einem bestimmten Bereich in die Scheibe eingraben. Der Kurbelantrieb ist zudem eine konstruktiv einfache und dennoch besonders zuverlässige Lösung zum Zustellen der Bremse.

Dabei ist die Zuspanneinheit dazu ausgelegt, den Bremsbelag auf einer Kurvenbahn parallel zur Bremsscheibe zu bewegen, welche der Ringgeometrie der Bremsscheibe angenähert ist. Der Begriff der Kurvenbahn ist dabei nicht eng zu interpretieren. Es ist auch denkbar, wenn eine annähernde Kurvenbahn aus geraden Sehnenstücken zusammengesetzt wird, die zueinander winklig ausgerichtet sind.

Da jede der Druckflächen der wenigstens zwei oder mehr vorzugsweise in sich axial längenveränderbaren Bremsstempel an ihrer der Bremsbelageinheit zugewandten Seite mit einer Ausnehmung mit einer rampenförmigen Kontur versehen ist, in die jeweils ein Rollkörper eingreift, der sich einerseits an der rampenförmigen Kontur der Druckflächen der Bremsstempel und andererseits an der Bremsbelageinheit abstützt, lässt sich die selbstverstärkende Bremse besonders vielseitig einsetzen und zuverlässig regeln.

Dabei ist es zweckmäßig, wenn der wenigstens eine elektromotorische Antrieb zum Betätigen der Zuspanneinheit oder ein weiterer elektromotorischer Antrieb ferner zum Antrieb der Bremsstempel zumindest zum Verändern der axialen Länge der Bremsstempel ausgelegt ist.

Erfindungsgemäß ist die rampenförmige Kontur nach Art einer Rinne mit einem konstanten oder sich verändernden Rampenwinkel ausgebildet ist, welche eine Kurvenbahn beschreibt. Derart wird der Gegenstand des Hauptanspruches 1 besonders einfach realisiert.

Zur Realisierung von Bremsungen in Vorwärts- und Rückwärtsfahrt ist es ferner vorteilhaft, wenn die rampenförmige Kontur ausgehend von einer tiefsten Stelle in zwei Richtungen eine Kurvenbahn beschreibt bzw. eine kurvenförmige Rinne ausbildet.

Dabei dreht der Elektromotor direkt oder über wenigstens eines oder mehrere Getriebe eine Kurbel, die einen Kurbelzapfen aufweist, der sich parallel zur Bremsscheibenachse erstreckt und in eine korrespondierend ausgerichtete Öffnung in der Druckplatte formschlüssig eingreift, so dass eine Art Drehlager gebildet wird, um das sich die Bremsbeläge drehen, wenn sie an den Kurvenbahnen in den Rampenflächen geführt werden (wobei sich das Drehlager selbst auf einer Kreisbahn mit einem kleinen Radius bewegt).

Hierbei hat die Kurvenbahn eine Kreisbogenabschnittsform, deren Radius dem Radius der Kreisbahn entspricht, auf der sich die Kurbel bewegt.

Um die Antriebsbewegung der Kurbel in eine Bewegung der Bremsbelageinheit umzusetzen, greift der Kurbelzapfen in eine korrespondierend ausgerichtete Öffnung in der Druckplatte ein.

Der kompakte und kostengünstige Aufbau der selbstverstärkenden Scheibenbremse wird dadurch optimiert, dass der Elektromotor eine Abtriebswelle aufweist, die parallel zur Bremsscheibenachse ausgerichtet ist und die direkt oder über weitere zwischengeschaltete Getriebeelemente - die ebenfalls Drehachsen aufweisen, die parallel zur Bremsscheibendrehachse ausgerichtet sind, so dass sich ein kompakter, in der Herstellung günstiger Aufbau ergibt.

Vorzugsweise wird ergänzend eine Auslegung der Zuspanneinheit derart realisiert, dass sie gleichförmige Drehungen einer Ausgangswelle des elektromotorischen Antriebs während einer Zuspannbewegung in eine Bewegung des Bremsbelages umsetzt, deren Bewegungskomponente zumindest in tangentialer Richtung (Richtung U) nicht linear ist.

Derart werden nicht nur die Herstellkosten einer Bremsanlage für Nutzfahrzeuge reduziert sondern es wird auch deutlich der Leistungsbedarf des elektromotorischen Antriebs gegenüber vergleichbaren direkt elektromechanisch betätigten Bremsen durch eine effiziente Selbstverstärkung auch im Grenzbereich des Bremsbelagreibbeiwertes minimiert. Nach besonders vorteilhaften Varianten ist es sogar möglich, den Leistungsbedarf gegenüber sonstigen selbstverstärkenden Konzepten deutlich zu verringern.

Die Bahnen für die Rollkörper bzw. Rinnen weisen einen Radius auf, der dem Radius der Kurvenbahn der Kurbel bei ihrer Bewegung auf einer Kreisbahn entspricht. Hierdurch bleibt die Bremsbelageinheit bei einer Umfangsverschiebung parallel zu sich selbst ausgerichtet, d.h., jeder Punkt auf der Bremsbelageinheit führt die jeweils gleiche Bewegung aus.

Alternativ wären nach einer alternativen Ausführungsform auch z.B. zylindrische oder auf sonstige Weise geformte Rollkörper (z.B. Tonnen) denkbar, die dann z.B. auf einer entsprechend gekrümmten rinnenartigen Ausnehmung in den Bremsstempeln abrollen würden.

Vorzugsweise ist der elektromotorische Antrieb als Aktuator mit einer Steuerungs- und/oder Regelungseinrichtung gekoppelt, die dazu ausgelegt ist, die Position des Stellgliedes und damit des Bremsbelages zu steuern oder zu regeln.

Nachfolgend wird die Erfindung unter Bezug auf die Zeichnung anhand von Ausführungsbeispielen näher beschrieben. Es zeigen:
- Fig. 1: eine Skizze, welche den prinzipiellen Aufbau einer Scheibenbremse mit Selbstverstärkung veranschaulichen;
- Fig. 2: eine weitere Skizze zur Veranschaulichung der prinzipiellen Funktion der Scheibenbremsen aus Fig. 1;
- Fig. 3: eine perspektivischen Ansicht eines Bereiches einer Bremse nach der Bauart der Fig. 1;
- Fig. 4: eine Skizze zur Veranschaulichung der Bewegung des Bremsbelages am Bremsring; und
- Fig. 5: eine vergleichende Übersicht des Verhaltens von Wälzkörpern in Kurvenbahnen bei Bremsungen in verschiedenen Fahrtrichtungen und in der Neutralstellung (ungebremste Stellung).

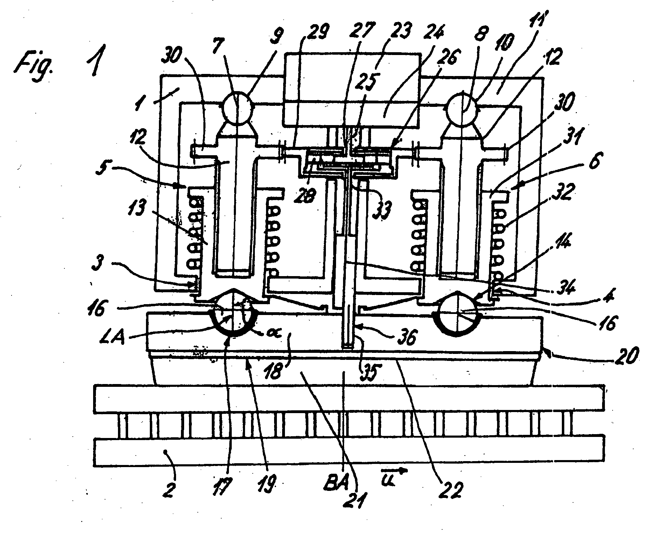

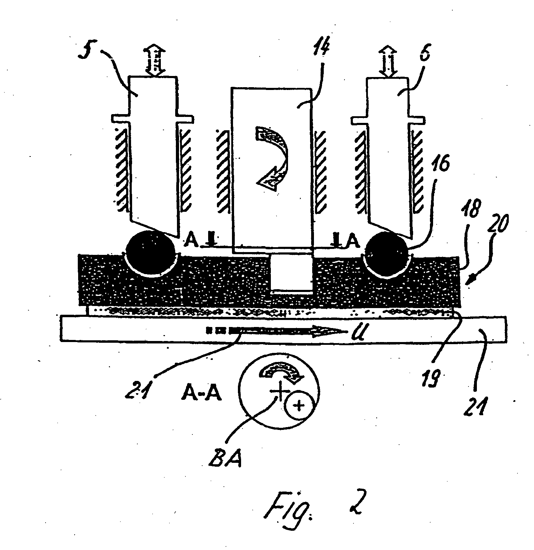

Die dargestellten Konzeptvarianten werden mit ihren wesentlichen Merkmalen nachfolgend beschrieben:
Zunächst sei näher das Funktionsprinzip der Fig. 1 mit einer nicht verstellbaren Rampensteigung in den Druckflächen 5, 6 der Bremsstempel beschrieben. Fig. 2 veranschaulicht im Zusammenspiel mit Fig. 1 das Grundfunktionsprinzip.

Bevorzugt bauen die erfindungsgemäßen Scheibenbremsen auf einem Festsattelkonzept auf, bei dem ein ein- oder mehrteiliger Bremssattel 1 (auch Bremsengehäuse genannt) relativ zu einer Bremsscheibe 2 unbeweglich an einer Radachse befestigt ist. Basis der nachfolgend beschriebenen Konzepte ist insofern eine Festsattelbremse mit äußerer elektromechanisch betätigter und elektronisch geregelter Verschleißnachstellung. Das Wirkprinzip und die beschriebenen Merkmale sind prinzipiell auch für andere Bremsenbauarten, wie z.B. Schiebesattel- oder Schwenksattelbremsen, anwendbar. Lediglich der die Bremsbetätigung beinhaltende Sattelkopf der mechanisch/pneumatisch betätigten Basisbremse wird ersetzt durch die elektromechanischer Zuspanneinheit mit Selbstverstärkung. Eine Festsattelbremse mit pneumatisch betätigter Zuspanneinrichtung dieser Art zeigen z.B. die DE 36 10 569 A1, die DE 37 16 202 A1 oder die EP 0 688 404 A1. Eine Festsattelbremse mit elektromotorischer Nachstellung zeigt die WO 02/14 708 A1. Derartige elektromotorische Nachstelleinrichtungen können bei der vorgeschlagenen Ausführungsbeispielen - wenn gewünscht - jeweils reaktionsseitig angeordnet werden. Es kann auch sogar nur reaktionsseitige eine einzige Nachstellvorrichtung mit einem Elektromotor als Antrieb angeordnet sein. Diese Variante ist insbesondere bei einer Scheibenbremse mit einer Selbstverstärkungseinrichtung, einem elektromotorischem Aktuator und mit einem Festsattel besonders kostengünstig und bauraumsparend.

In Fig. 1 ist der Bremssattel 1 lediglich in seinem zuspannseitigen Bereich angedeutet. In der Praxis umgreift er vorzugsweise rahmenartig den oberen Umfangsbereich der Bremsscheibe und ist an einem (hier nicht zu erkennenden Achsflansch) befestigt.

Der Bremssattel 1 weist an seiner der Bremsscheibe 2 mit einer Bremsscheibendrehachse zugewandten Seite eine oder mehrere, vorzugsweise zwei Öffnungen 3, 4 und eine korrespondierende Anzahl von Bremsstempeln 5, 6 (hier zwei) auf, die parallel zur Bremsscheibenachse BA ausgerichtet sind.

Nach Fig. 1 bis 4 sind jeweils zwei Bremsstempel 5, 6 parallel zueinander angeordnet.

Die beiden Bremsstempel 5, 6 bzw. Nachstellkolben stützen sich jeweils direkt oder über zwischengeschaltete Elemente; hier Gleitlagerschalen 9, 10; an der bremsscheibenabgewandten Rückwand 11 des Bremssattels ab. Als Lagereinrichtungen werden vorzugsweise Kugeln 7, 8 mit Gleitlagerschalen 9 eingesetzt.

Die Lagereinrichtungen sind derart ausgelegt, dass sie eine Drehung der Bremsstempel 5, 6 bzw. Nachstellkolben um ihre eigene Längsachse LA erlauben.

Dabei sind jeweils im Bremsstempel 5, 6 und im Bremssattel kugelsegmentartige (kalottenartige) Ausnehmungen ausgebildet, von denen in eine (hier in die im Bremssattel) die Gleitlagerschalen 9, 10 eingesetzt ist, so dass sich die Kugeln 7, 8 relativ zur Gleitlagerschale drehen können.

Alternativ können die Kugeln 7, 8 auch als kugelförmige Ansätze an den zum Bremssattel gewandten Enden der Bremsstempel 5, 6 ausgebildet sein (hier nicht dargestellt), die dann in korrespondierende Ausnehmungen im Bremssattel mit Gleitlagerschalen eingreifen.

Denkbar sind anstelle der Kugeln und Ausnehmungen auch ebene Gleitlager oder ringförmige Lager oder dgl.. (hier nicht dargestellt).

Die Bremsstempel 5, 6 weisen jeweils eine mit einem Außengewinde versehene Spindel 12 auf, auf der eine hülsenartige Mutter 13 mit einem korrespondierenden Innengewinde verdrehbar angeordnet ist. Dieses Gewinde kann je nach Auslegung nicht selbsthemmend oder selbsthemmend sein.

Die Muttern 13 weisen an ihrer von der Bremsscheibe abgewandten Seite einen Flansch 31 auf, wobei zwischen dem Flansch 31 und der Innenwandung des Bremssattels 1 jeweils Druckfedern 32 wirken, welche die Mutter 13 konzentrisch umfassen und auf den Flansch eine vorgegebene Kraft ausüben bzw. den Flansch 31 relativ zur Bremssattelinnenwand vorspannen.

Alternativ wird die gesamte Mechanik gegen die Druckplatte verspannt.

Nach Fig. 1 bis 4 ist die Mutter 13 jedes Bremsstempels 5, 6 an der zur Bremsscheibe zugewandten Seite angeordnet und die Spindel 12 an der zum Bremssattelinneren gewandten Seite. Eine umgekehrte Anordnung wäre auch denkbar (hier nicht dargestellt).

Durch Verschrauben der Mutter 13 auf der Spindel kann die axiale Länge jedes einzelnen derart ausgebildeten Bremsstempels 5, 6 - beispielsweise zum Ausgleich von Bremsbelagverschleiß und beim Anlegen der Beläge an die Bremsscheibe 2 - verstellt werden.

An ihrer der Bremsscheibe zugewandten Seite, also an ihren Druckflächen, sind die Bremsstempel 5, 6, hier die Muttern 13, jeweils mit einer rampenartigen Ausnehmung oder Kontur 14 versehen, deren tiefste Stelle vorzugsweise im Bereich der Längsachse der Bremsstempel liegt.

In die Ausnehmungen 14 greifen jeweils Rollkörper 16 ein, die hier in bevorzugter Ausgestaltung als Kugeln 16 ausgebildet sind.

Die Rollkörper 16 greifen an ihren von der Bremsscheibe abgewandten Seiten in je nach Ausgestaltung der Rollkörper ausgebildete, hier kalottenförmige Gleitlagerschalen 17, die in Ausnehmungen korrespondierender Formgebung in einer Druckplatte 18 eingesetzt sind, die an der Trägerplatte 19 eines zuspannseitigen Bremsbelages 20 mit Bremsbelagmaterial 21 anliegt, der im Bremssattel 1 parallel zur Bremsscheibendrehachse BA und in Umfangsrichtung U (bzw. tangential bzw. parallel zur Tangentialen) relativ zur Bremsscheibe 2 beweglich angeordnet ist.

Eine Klammerfeder 22 zwischen Druckplatte 18 und Muttern 13 hält die Druckplatte 18 unter Vorspannung an den Muttern 13. Alternativ ist es auch denkbar, die Druckplatte auf andere Weise, z.B. am Gehäuse (Sattel) zu verspannen.

Zum Antrieb der Bremse dient ein elektrischer Antriebsmotor 23, dem vorzugsweise ein Untersetzungsgetriebe 24 nachgeordnet ist, dessen Abtriebswelle 25 auf ein weiteres Getriebe 26, insbesondere ein Planetengetriebe wirkt, das mittig zwischen den Spindeln angeordnet ist.

Dabei treibt die Abtriebswelle 25 ein Sonnenrad 27 des Planetengetriebes 26, welches Planetenräder 28 mitnimmt. Die Planetenräder 28 kämmen (hier nicht detailliert dargestellt) mit dem Sonnenrad 27 und einem innen- und außenverzahnten Ring 29. Je nach Schaltzustand (Schaltbarkeit hier nicht dargestellt) setzen sie entweder den Planetenstern 33 oder den Ring 29 in Drehung. Der Ring 29 kämmt mit seiner Außenverzahnung mit Zahnrädern 30, die auf die Spindeln 12 aufgesetzt oder an diese angeformt sind.

Zum selbsttätigen Umschalten des Antriebs (z.B. ein Elektromotors) kann ein federbelasteter Kugelrastmechanismus vorgesehen sein (hier nicht dargestellt). Der Umschaltvorgang kann auch auf andere Weise realisiert werden (z.B. elektromagnetisch).

In axialer Verlängerung des Planetensterns 33 ist eine hier zylindrisch ausgebildete und parallel zur Bremsscheibenachse angeordnete Kurbel 34 vorgesehen, die an ihrer zur Bremsscheibe 2 gewandten Seite mit einem außermittig (exzentrisch) ausgebildeten, ebenfalls parallel zur Bremsscheibenachse BA ausgerichteten Kurbelzapfen 35 in eine korrespondierende Öffnung 36 in einer Bremsbelageinheit eingreift, wobei die Öffnung 36 vorzugsweise einen zum Querschnitt des Kurbelzapfens 35 korrespondierenden Querschnitt aufweist.

Im Ausführungsbeispiel der Fig. 1 besteht die Betätigungseinrichtung bzw. Zuspanneinheit aus den zwei, zum Zwecke der Verschleißnachstellung längenveränderlichen Nachstellkolben bzw. Bremsstempeln 5, 6, welche in ihrer der Bremsscheibe 2 zugewandten Druckfläche die Ausnehmungen 14 nach Art von Rampenkonturen aufweisen, an denen die Rollkörper 16 ablaufen, welche die von der Bremse erzeugte Zuspannkraft auf die Bremsbelageinheit bzw. auf die auf den Bremsbelag aufliegende Druckplatte übertragen.

In der Druckfläche der Bremsbelageinheit bzw. der Druckplatte 18 sind die Rollkörper 16 über ein entgegengesetzt gestaltetes Rampenprofil (hier nicht dargestellt) oder (bevorzugt, da die Rollkörper besonders sicher geführt sind; hier dargestellt) in dem Gleitlagerbett (Gleitlagerschalen 17) aufgenommen. Es wäre auch eine umgekehrte Anordnung mit Rampen in der Bremsbelageinheit und einem Gleitlagerbett für die Rollkörper in den Bremsstempeln 5, 6 denkbar (hier nicht dargestellt).

Die Bremsbelageinheit, hier bestehend aus der ein- oder mehrteiligen Kombination von Bremsbelag 20 und Druckplatte 18, wird federnd so gegen die Bremsstempel und Nachstellkolben 5, 6 gedrückt, dass die dazwischen angeordneten Rollkörper 16 zwischen der Bremsbelageinheit und den Bremsstempel elastisch eingespannt sind.

Die Betätigung der Bremse erfolgt nach einem Anlegevorgang des Bremsbelages 20 an die Bremsscheibe durch ein Verschieben der Druckplatte nebst Bremsbelag 20 parallel zur Reibfläche der Bremsscheibe in Drehrichtung bzw. Umfangsrichtung derselben.

Diese Verschiebung wird vorzugsweise durch den Kurbeltrieb 35, 36 bewirkt, der mit einem Abtriebs- und hier Kurbelzapfen 35 etwa mittig an der Druckplatte 18 der Bremsbelageinheit 18, 20 angreift und parallel zur Rotationsachse der Bremsscheibe im Zuspanngehäuse - Bremssattel - 1 gelagert wird.

Die Betätigung des Kurbeltriebes erfolgt über den elektrischen Antrieb, z.B. den Elektromotor 23 mit nachgeschaltetem Getriebe 24.

Die tiefste Stelle der Ausnehmungen bzw. Rampen 14 ist jeweils vorteilhaft so ausgestaltet, dass die Rollkörper, insbesondere Kugeln an der tiefsten Stelle verrastet sind und nur gegen eine Mindestrastkraft aus der Vertiefung lösbar sind.

Der Kurbelzapfen 35 ist damit in der Druckplatte bzw. der diese enthaltenden Bremsbelageinheit derart gelagert, dass der Bremsbelag der Bewegungsbahn des Kurbelzapfens 35 folgen muss.

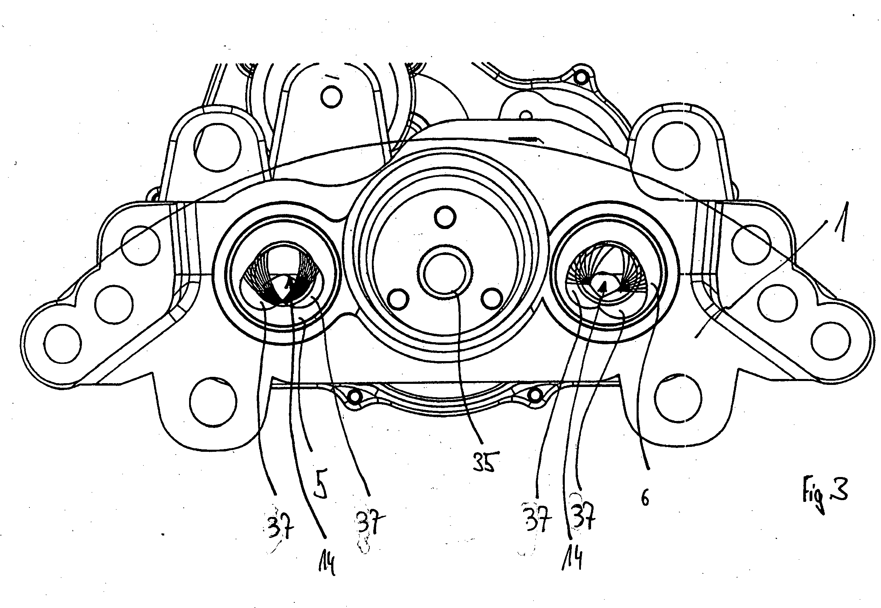

Die Rampen 14 sind daher als Rinnen 37 ausgebildet, die eine Kurvenform aufweisen (siehe Fig. 3, 4 und 5).

Das doppelsinnige Rampenprofil (Ausnehmung 14) in den Nachstellkolben 5, 6 ermöglicht dabei eine Selbstverstärkungswirkung in beiden Fahrtrichtungen. Es ist eine Rad-Drehrichtungsabhängige Steuerung der Belagverschiebung realisierbar.

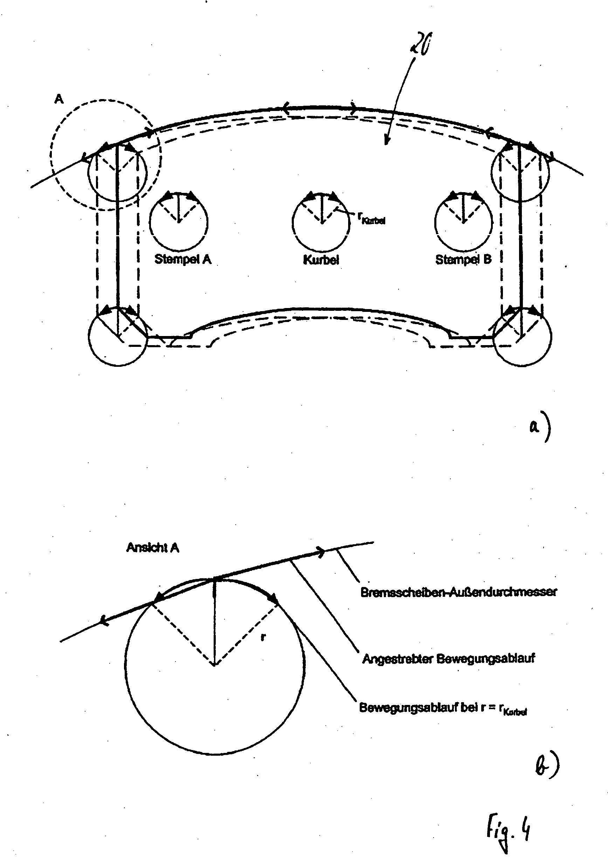

Da die Bremsbelageinheit 20 im Bereich des Kurbelzapfens durch formschlüssig gelagerten Eingriff des Kurbelzapfens 35 gehalten wird, beschreibt die Bremsbelageinheit 20 beim Zuspannen eine Art Kurvenbewegung, die dazu führt, dass die Bremsbelageinheit 20 bei geeigneter Abstimmung der Kurvenform der Bremsscheibenringgeometrie in diesem Bereich angenähert folgt, was verhindert, dass der Belag sich in die Bremsscheibe eingräbt, da er beim Zuspannen einen großen Bereich des Bremsscheibenringes überstreicht (siehe Fig. 4, in welcher der Außenrand des Bremsscheibenringes zu erkennen ist).

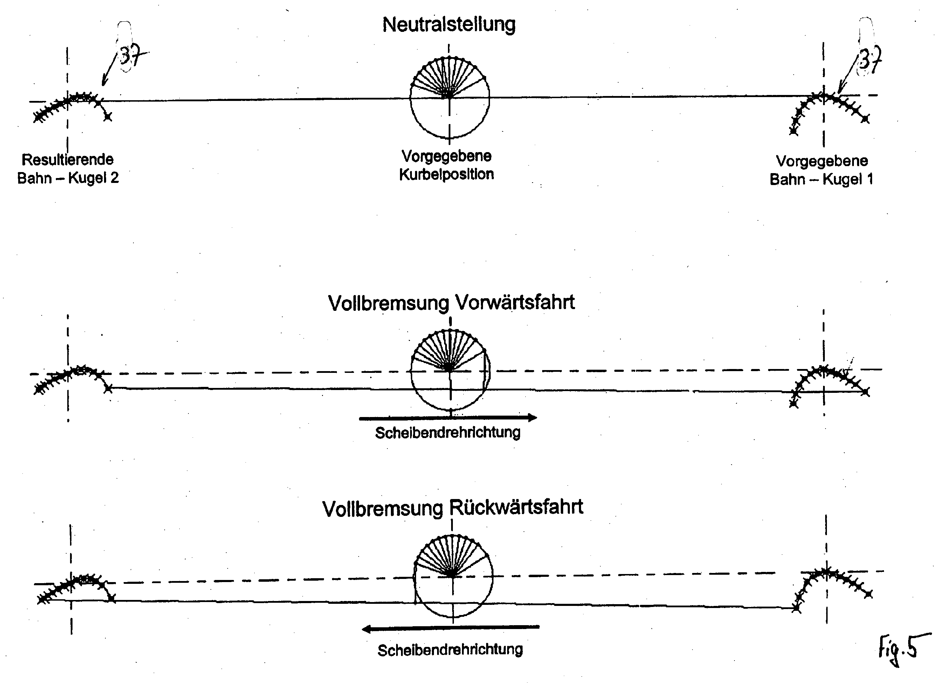

Dabei bietet es sich an, wenn ausgehend von der tiefsten Stelle in den Rampen bzw. Rinnen in beiden Richtungen eine Kurvenbahn ausgebildet ist, so dass die eine der Rinnen 37 jeweils als zur Bremsscheibe geneigte Rampe zur Selbstverstärkung in Vorwärtsfahrt und die andere zur Selbstverstärkung in Rückwärtsfahrt genutzt werden kann (siehe auch Fig. 5).

Je nach Fahrtrichtung liegt einer der Wälzkörper- Kugel 1 in Fig. 5 - in Fahrtrichtung bei der Bremsung "vorn"..

Die Bremsbelageinheit wird durch den Kurbelzapfen 35 und einen der Wälzkörper auf eine Kurvenbahn bewegt (siehe z.B. Fig. 5 oben), wobei der jeweils hinten liegende zweite Roll- bzw. Wälzkörper 16 (Kugel 1, Kugel 2) dieser Bewegung folgt. Fig. 5 veranschaulicht diese Situation anhand eines Vergleiches "Neutralstellung, Vollbremsung Vorwärtsfahrt und Vollbremsung Rückwärtsfahrt". Daraus ergibt es sich, dass die beiden Kurvenbahnen ausgehend von der tiefsten Stelle in den Rampen in den beiden Drehrichtungen jeweils nicht gleich sein sollten. Bei einer Auslenkung der Kurbel 34 folgen die Wälzkörper den vorgegebenen Kurvenbahnen der Rampen und laufen auf diese auf.

Fig. 1 zeichnet sich durch einen konstanten Rampenwinkel α aus. Damit wird ein besonders einfacher konstruktiver Aufbau erreicht, der sich durch einen robusten Aufbau, eine gute Funktionssicherheit und niedrige Herstellkosten auszeichnet. Insbesondere kann ein Elektromotor 23 erstaunlich geringer Ausgangsleistung eingesetzt werden. Dabei bieten sich die Kugeln 16 als kostengünstige Rollkörper an, die sich quasi selbst in der Rampenfläche ausrichten. Zur Erhöhung der Tragfähigkeit können die Kugeln auch in angepassten Laufrillen ablaufen.

Eine Variante mit Rollen als Rollkörpern 16 würde dagegen eine besonders geringe Hysterese aufweisen (hier nicht dargestellt).

Denkbar ist es, einen separaten Antrieb für die Bremsstempel vorzusehen oder aber Nachstell- und Kurbelantrieb zu kombinieren (Fig. 1 und Fig. 2). Letzteres hat den Vorteil, dass nur ein einziger Antriebsmotor für beide Funktionen benötigt wird.

Denkbar ist es dabei auch, eine Lüftspielüberwindung durch den separaten Nachstellantrieb vorzunehmen (Phase 1 der Funktionsbeschreibung).

Ebenfalls denkbar ist eine Lüftspielüberwindung durch den Kurbelantrieb mittels besonders "steiler Rampe" bei Verschiebungsbeginn.

### Bezugszeichen

- Bremssattel: 1
- Bremsscheibe: 2
- Öffnungen: 3, 4
- Bremsstempel: 5, 6
- Lagerkugeln: 7, 8
- Gleitlagerschalen: 9, 10
- Rückwand: 11
- Spindel: 12
- Mutter: 13
- rampenartige Ausnehmung: 14
- Rollkörper: 16
- Gleitlagerschälen: 17
- Ausnehmungen: 15
- Druckplatte: 18
- Trägerplatte: 19
- Bremsbelag: 20
- Bremsbelagmaterial: 21
- Klammerfeder: 22
- Antriebsmotor: 23
- Untersetzungsgetriebe: 24
- Abtriebswelle: 25
- Getriebe: 26
- Sonnenrad: 27
- Planetenräder: 28
- Ring: 29
- Zahnräder: 30
- Flansch: 31
- Druckfedern: 32
- Planetenstern: 33
- Kurbel: 34
- Kurbelzapfen: 35
- Öffnung: 36
- Rinne: 37
- Rampenwinkel: α
- Längsachse: LA
- Unfangsrichtung: U
- Bremsscheibenachse: BA

## Patentansprüche

1. Scheibenbremse in selbstverstärkender Bauart, mit elektrischem Aktuator bei der eine vom Aktuator aufgebrachte Betätigungskraft mit Hilfe einer zwischen Aktuator und Bremsbelag angeordneten Selbstverstärkungseinrichtung verstärkt wird, mit folgenden Merkmalen:
a) einer Zuspanneinheit zum Zuspannen wenigstens eines Bremsbelages (20) einseits einer Bremsscheibe (2) unter Durchführung einer Zuspannbewegung des Bremsbelages (20) zur Bremsscheibe (2), wobei die Zuspannbewegung in wenigstens eine parallel und wenigstens eine relativ zur Bremsscheibendrehachse (BA) tangential bzw. senkrecht verlaufende Bewegungskomponente (Richtung U) zerlegbar ist,
b) wenigstens einem elektromotorischen Antrieb (23) als Aktuator zum Betätigen der Zuspanneinheit,
**dadurch gekennzeichnet, dass**
c) die Zuspanneinheit eine Kurbel (34) aufweist, die einen Kurbelzapfen (35) hat, der sich parallel zur Bremsscheibenachse (BA) erstreckt und der zur Bewegung der Bremsbelageinheit tangential zur Bremsscheibe, d.h. parallel zur Bremsscheibenreibfläche, dient und formschlüssig in eine korrespondierende Öffnung in einer Druckplatte (18) eingreift, so dass die Bremsbelageinheit direkt und unmittelbar der Bewegung der Kurbel (34) folgt, so dass die Zuspanneinheit dazu ausgelegt ist, den Bremsbelag oder die Bremsbelageinheit (20) auf einer nicht geraden gekrümmten Kurvenbahn parallel zur Bremsscheibenreibfläche zu bewegen,
d) wobei die Zuspanneinheit ferner wenigstens zwei oder mehr Bremsstempel (5, 6) aufweist, die parallel zur Bremsscheibenachse BA ausgerichtet sind und die sich an ihrem einen Ende am Bremssattel (1) oder einem mit dem Bremssattel (1) verbundenen Bauteil über eine Lagereinrichtung (7, 8; 9, 10) abstützen, die eine Drehung wenigstens eines Teils der Bremsstempel um deren Längsachse (LA) zulässt,
e) wobei jeder der wenigstens zwei oder mehr Bremsstempel (5, 6) eine Druckfläche aufweist, die an ihrer der Bremsbelageinheit zugewandten Seite mit einer Ausnehmung (14) mit einer rampenförmigen Kontur versehen ist, in die jeweils ein Rollkörper (16) eingreift, der sich einerseits an der rampenförmigen Kontur der Druckflächen der Bremsstempel (5, 6) und andererseits an der Bremsbelageinheit abstützt,
f) wobei die Bremsbelageinheit (18,20) an ihrer den Brernsstempeln zugewandten Seite mit einem Gleitlagerbett oder mit einer Ausnehmung mit einer rampenförmigen Kontur versehen ist, in das bzw. in die jeweils der Rollkörper (16) eingreift,
und wobei
g) die rampenförmigen Kontur in den Druckflächen der Bremsstempel (5, 6) nach Art einer Rinne (37) ausgebildet ist, welche eine Kurvenbahn beschreibt, die eine Kreissegmentform hat, deren Radius dem Radius der Kreisbahn entspricht, welche der Kurbelzapfen bei einer Bremsung beschreibt.

2. Scheibenbremse nach Anspruch 1, **dadurch gekennzeichnet, dass** die Zuspanneinheit dazu ausgelegt ist, den Bremsbelag auf einer Kurvenbahn parallel zur Bremsscheibe (2) zu bewegen, welche der Ringgeometrie der Bremsscheibe, angenähert ist.

3. Scheibenbremse nach einem der vorstehenden Ansprüche, **dadurch gekennzeichnet, dass** die Rinne (37) ausgehend von einer tiefsten Stelle in zwei Richtungen eine Kurvenbahn beschreibt.

4. Scheibenbremse nach einem der vorstehenden Ansprüche, **dadurch gekennzeichnet, dass** die Rinne (37) ausgehend von der tiefsten Stelle der Rampen in ihren beiden Richtungen Kurvenbahnen mit einer unterschiedlichen Geometrie aufweist.

5. Scheibenbremse nach einem der vorstehenden Ansprüche, **dadurch gekennzeichnet, dass** die Rinne (37) ein Kurvenform hat, die derart gewählt ist, dass die Bremsbelageinheit eine Drehbewegung ausführt, bei der sie sich auch in sich dreht.

6. Scheibenbremse nach einem der vorstehenden Ansprüche, **dadurch gekennzeichnet, dass** nur auf der von der Zuspanneinheit abgewandten Seite der Bremsscheibe, der Reaktionsseite, eine einzige Nachstellvorrichtung mit einem Elektromotor als Antrieb angeordnet ist.

## Claims

1. Self-energising disc brake, having an electric actuator, in which disc brake an actuating force which is applied by the actuator is boosted with the aid of a self-energising device which is arranged between the actuator and the brake lining, having the following features:
a) a brake application unit for applying at least one brake lining (20) on one side of a brake disc (2) while an application movement of the brake lining (20) to the brake disc (2) is carried out, which application movement can be broken down into at least one parallel movement component and at least one movement component (direction U) which extends tangentially or perpendicularly relative to the brake disc rotational axis (BA),
b) at least one electric motor drive (23) as actuator for actuating the brake application unit,
**characterised in that**
c) the brake application unit has a crank (34) which has a crank pin (35) which extends parallel to the brake disc axis (BA) and serves to move the brake lining unit tangentially with respect to the brake disc, that is to say parallel to the friction face of the brake disc, and engages positively into a corresponding opening in a pressure plate (18), with the result that the brake lining unit follows the movement of the crank (34) directly and immediately, so that the brake application unit is designed to move the brake lining or the brake lining unit (20) on a non-straight arched curved path parallel to the friction face of the brake disc,
d) the brake application unit furthermore having at least two or more brake plungers (5, 6) which are oriented parallel to the brake disc axis BA and are supported at their one end on the brake calliper (1) or a component which is connected to the brake calliper (1) via a bearing device (7, 8; 9, 10) which permits a rotation of at least one part of the brake plungers about their longitudinal axis (LA),
e) each of the at least two or more brake plungers (5, 6) having a pressure face which is provided on its side which faces the brake lining unit with a recess (14) having a ramp-shaped contour, into which in each case a rolling body (16) engages which is supported on one side on the ramp-shaped contour of the pressure faces of the brake plungers (5, 6) and on the other side on the brake lining unit,
f) the brake lining unit (18, 20) being provided on its side which faces the brake plungers with a sliding bearing bed or with a recess having a ramp-shaped contour, into which bed or recess in each case the rolling body (16) engages,
and wherein
g) the ramp-shaped contour in the pressure faces of the brake plungers (5, 6) is configured in the manner of a groove (37) which describes a curved path which has a circular segment shape, the radius of which corresponds to the radius of the circular path which the crank pin describes during a braking operation.

2. Disc brake according to Claim 1, **characterised in that** the brake application unit is designed to move the brake lining parallel to the brake disc (2) on a curved path which is approximated to the ring geometry of the brake disc.

3. Disc brake according to one of the preceding claims, **characterised in that**, starting from a lowest point, the groove (37) describes a curved path in two directions.

4. Disc brake according to one of the preceding claims, **characterised in that**, starting from the lowest point of the ramps, the groove (37) has curved paths having different geometry in its two directions.

5. Disc brake according to one of the preceding claims, **characterised in that** the groove (37) has a curved shape which is selected in such a way that the brake lining unit performs a rotational movement in which it also rotates within itself.

6. Disc brake according to one of the preceding claims, **characterised in that** a single adjusting apparatus having an electric motor as drive is arranged only on that side of the brake disc which faces away from the brake application unit, the reaction side.

## Revendications

1. Frein à disque en conception à renfort automatique, à un acteur électrique, dans lequel un effort d'actionnement appliqué par ledit acteur est renforcé moyennant un dispositif de renfort automatique disposé entre ledit acteur et la garniture de frein, présentant les caractéristiques suivantes :
a) une unité de serrage de frein à serrer au moins une garniture de frein (20) d'un côté d'un disque de frein (2), en réalisant un mouvement de serrage de ladite garniture de frein (20) vers ledit disque de frein (2), au mouvement de serrage de frein étant apte à être décomposé en au moins un composant de mouvement s'étendant en parallèle et en au moins un composant de mouvement (direction U) s'étendant tangentiellement ou respectivement orthogonalement relativement à l'axe de révolution du disque de frein (BA),
b) au moins un moyen d'entraînement électromoteur (23) en tant que l'acteur à actionner ledit dispositif de serrage de frein,
caractérisé en ce
c) que ladite unité de serrage de frein comprend une manivelle (34) munie d'un maneton du vilebrequin (35) s'étendant en parallèle à l'axe du disque de frein (BA), qui sert à mouvoir ladite unité de serrage de garniture en sens tangentiel relativement au disque de frein, c'est-à-dire en parallèle à l'aire de frottement du disque de frein, et entre en prise géométrique en une ouverture correspondante dans une plaque de pression (18) d'une telle manière, que ladite unité de garniture de frein suive directement et immédiatement le mouvement de ladite manivelle d'une telle façon, que ladite unité de serrage soit conçue de porter ladite garniture ou ladite unité de garniture de frein (20) le long d'un chemin incurvé non droit curviligne en parallèle à l"aire de frottement du disque de frein,
d) dans lequel ladite unité de serrage de frein comprend au plus au moins un ou plus poinçons de frein (5, 6) orientés en parallèle à l'axe du disque de frein BA, qui s'appuient via un moyen de palier (7, 8; 9, 10) par leurs premières extrémités audit étrier de frein (1) ou un élément raccordé audit étrier de frein (1), lequel moyen permit une rotation d'au moins une partie desdits poinçons de frein autour de leur axe longitudinal (LA),
€ dans lequel chacun desdits au moins deux ou plus poinçons de frein (5, 6) comprend une aire de pression qui est munie, de son côté en face de ladite unité de garniture de frein, d'un évidement (14) à un contour en rampe, dans lequel se met en prise un corps roulant respectif (16) qui s'appuie, d'un côté, audit contour en rampe desdites aires de pression desdits poinçons de frein (5, 6) et, d'autre côté, à ladite unité de garniture de frein,
f) dans lequel ladite unité de garniture de frein (18, 20) est munie, de son côté en face desdits poinçons de frein, d'un lit à palier lisse ou d'un évidement à un contour en rampe, dans lequel se met en prise ledit corps roulant respectif (16),
g) et dans lequel ledit contour en rampe dans lesdites aires de pression desdits poinçons de frein (5, 6) est configuré en conception d'une gouttière (37) qui décrit un chemin incurvé ayant la forme d'un segment circulaire dont le rayon correspond au rayon de la trajectoire circulaire décrite par ledit maneton du vilebrequin (35) au cas d'une opération de freinage.

2. Frein à disque selon la revendication 1, **caractérisé en ce que** ladite unité de serrage de frein est conçue à la fin, que ladite garniture de frein soit portée le long d'une voie incurvée en parallèle audit disque de frein (2), qui est approchée à la géométrie annulaire dudit disque de frein.

3. Frein à disque selon une quelconque des revendications précédentes, **caractérisé en ce que** ladite gouttière (37) décrit, à partir d'une position la plus basse, une trajectoire incurvée en deux directions.

4. Frein à disque selon une quelconque des revendications précédentes, **caractérisé en ce que** ladite gouttière (37) présente des trajectoires incurvées à géométries différentes, à partir de la position la plus basse des rampes en ses deux directions.

5. Frein à disque selon une quelconque des revendications précédentes, **caractérisé en ce que** ladite gouttière (37) présente une forme incurvée, qui est choisie d'une telle façon, que ladite unité de garniture de frein réalise un mouvement rotatif auquel elle tourne aussi en soi.

6. Frein à disque selon une quelconque des revendications précédentes, **caractérisé en ce qu'**un seul dispositif de rattrapage à un moteur électrique en tant que l'unité d'entraînement est n'disposé qu'au côté dudit disque de frein, qui est opposé à ladite unité de serrage de frein, c.à.d. le côté de réaction.
